# EUROPEAN PATENT APPLICATION

(11) **EP 2 014 710 A1**
(43) Date of publication of application: **14.01.2009**
(21) Application number: 08009820.5
(22) Date of filing: 29.05.2008
(51) Int. Cl.: C08L 21/00, C08L 7/00, B60C 1/00, B60C 9/00

(54) **Rubber composition for carcass ply or band and pneumatic tire using the same**

(30) Priority: 13.06.2007 JP 2007156682
(71) Applicant: Sumitomo Rubber Industries, Ltd., Kobe-shi Hyogo-ken (JP)
(72) Inventor: Wakabayashi, Noboru, Kobe-shi Hyogo 651-0072 (JP)
(74) Representative: Manitz, Finsterwald & Partner GbR

(57) **Abstract**

A pneumatic tire equipped with a carcass ply or a band using a rubber composition for a carcass ply or a band, in which characteristics that are desired for the rubber composition for a carcass ply or a band such as adhesiveness with a cord for a tire, durability such as rubber strength, and the process-passing property are maintained while decreasing the used amount of raw materials derived from petroleum resources, is provided by the rubber composition for a carcass ply or a band containing 20 to 80 parts by mass of silica to 100 parts by mass of a rubber component consisting of 5 to 70 parts by mass of a liquid rubber and 95 to 30 parts by mass of a solid rubber component, in which the solid rubber component contains 30 to 100% by mass of a natural rubber component containing at least one of a natural rubber and a modified natural rubber.

## Description

This nonprovisional application is based on Japanese Patent Application No. 2007-156682 filed with the Japan Patent Office on June 13, 2007, the entire contents of which are hereby incorporated by reference.

### BACKGROUND OF THE INVENTION

### Field of the Invention

The present invention relates to a rubber composition for a carcass ply or a band, and a pneumatic tire equipped with a carcass ply or a band using the rubber composition.

### Description of the Background Art

Because of the growing concern toward the environmental problem in recent years, a method for decreasing the used amount of raw materials derived from petroleum resources has been investigated in various technical fields. Tires generally sold on the market at present are constituted with raw materials of which a half or more of the total weight is from petroleum resources. For example, because a general tire for an automobile contains about 20% by mass of a synthetic rubber, about 20% by mass of carbon black, and other components such as softeners and synthetic fibers, not less than about 50% by mass of the entire tire is constituted from raw materials from petroleum resources. Therefore, the development of a rubber for a tire using raw materials derived from natural resources is desired in which required characteristics are satisfied at the same or higher level with the case of using raw materials derived from petroleum resources.

Conventionally, a rubber composition for a carcass ply and a rubber composition for a band of a tire are generally formed by compounding carbon black derived from petroleum resources from the viewpoint of a reinforcing property. However, assuming a time when petroleum supply dries up in the future, it is necessary to use a white filler such as silica or calcium carbonate. However, even when silica is compounded in place of carbon black, sufficient durability can not be obtained.

Further, a technique has been conventionally known in which processability is improved and hardness after vulcanization is improved by compounding at least one kind selected from a natural rubber and a synthetic rubber, and an isoprene rubber oxidative modification having an average molecular weight of 3000 to 50000 obtained by irradiating with an ultraviolet ray, an electron beam, a visible light, or the like onto an isoprene rubber dissolved in a solvent. Further, a technique has been known in which workability during kneading is improved and mechanical strength after vulcanization is improved by mixing a liquid natural rubber having a viscosity average molecular weight of 20000 to 95000 and a liquid polymer such as liquid polyisoprene into a natural rubber or a mixed rubber of a natural rubber and a synthetic rubber, mixing a reinforcing agent therein, and manufacturing a vulcanizable rubber composition. Further, a technique has been known in which workability during kneading is improved and mechanical strength after vulcanization is improved by a vulcanizable rubber composition made by compounding 55 parts by weight of carbon black, 0 to 30 parts by weight of a softener, and 2 to 4 parts by weight of a liquid polymer having a viscosity average molecular weight of 45000 to 95000 to 100 parts by weight of a rubber. However, these techniques do not consider a carcass ply, a band, and performance required to these at all, and the processability is not sufficient.

Further, a rubber composition for a tire tread using thermal expansible fine particles in which the surface is coated with a diene liquid polymer such as a liquid natural rubber or a liquid isoprene rubber has been known. However, this technique also does not consider a carcass ply, a band, and performance required to these at all, and the processability is not sufficient. Furthermore, a rubber composition for a tire has been known in which carbon black and a liquid polymer such as liquid polyisoprene having a number average molecular weight of 2000 to 50000 in a rubber composition containing a natural rubber and/or a polyisoprene rubber. However, this technique also does not consider a carcass ply, a band, and performance required to these at all, and the processability is not sufficient.

Further, a rubber composition for a tire tread is disclosed in Japanese Patent Laying-Open No. 07-118445 in which liquid polyisoprene having a carboxyl group and/or liquid polybutadiene having a carboxyl group occupies 3 to 40% by weight of the rubber component and a specified amount of a silane coupling agent is compounded. According to the invention disclosed in Japanese Patent Laying-Open No. 07-118445, a rubber composition for a tire tread is disclosed in which the gripping property on a frozen road surface is improved. However, the invention disclosed in this Japanese Patent Laying-Open No. 07-118445 also does not consider a carcass ply, a band, and performance required to these at all, and the processability is not sufficient.

### SUMMARY OF THE INVENTION

The present invention has been made to solve the above-described problems, and an object thereof is to provide a rubber composition for a carcass ply or a band in which characteristics that are desired for the rubber composition for a carcass ply or a band such as adhesiveness with a cord for a tire, durability such as rubber strength, and the process-passing property are maintained while decreasing the used amount of raw materials derived from petroleum resources, and a pneumatic tire equipped with the carcass ply or the band using the rubber composition.

The rubber composition for a carcass ply or a band of the present invention contains 20 to 80 parts by mass of silica to 100 parts by mass of a rubber component consisting of 5 to 70 parts by mass of a liquid rubber and 95 to 30 parts by mass of a solid rubber component, wherein the solid rubber component contains 30 to 100% by mass of a natural rubber component containing at least one of a natural rubber and a modified natural rubber.

The modified natural rubber used in the rubber composition for a carcass ply or a band of the present invention is preferably an epoxidized natural rubber.

The liquid rubber used in the rubber composition for a carcass ply or a band of the present invention is preferably a liquid natural rubber.

The solid rubber component used in the rubber composition for a carcass ply or a band of the present invention preferably consists of a natural rubber component.

The present invention also provides a pneumatic tire equipped with a carcass ply or a band constituted from the rubber composition of the present invention and a cord for a tire buried in the rubber composition.

According to the present invention, a rubber composition for a carcass ply or a band in which characteristics that are desired for the rubber composition for a carcass ply or a band such as adhesiveness with a cord for a tire, durability such as rubber strength, and the process-passing property are maintained while decreasing the used amount of raw materials derived from petroleum resources, and a pneumatic tire equipped with the carcass ply or the band using the rubber composition are provided.

The foregoing and other objects, features, aspects and advantages of the present invention will become more apparent from the following detailed description of the present invention when taken in conjunction with the accompanying drawings.

### BRIEF DESCRIPTION OF THE DRAWING

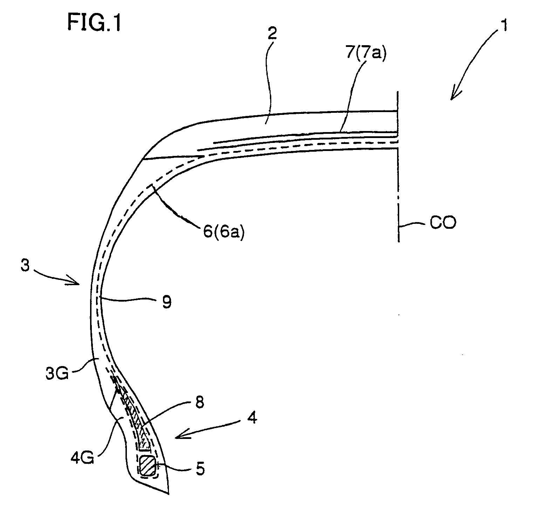

Fig. 1 is a brief cross-sectional drawing showing one example of the pneumatic tire of the present invention.

### DESCRIPTION OF THE PREFERRED EMBODIMENTS

The rubber composition for a carcass ply or a band of the present invention contains 20 to 80 parts by mass of silica to 100 parts by mass of a rubber component consisting of 5 to 70 parts by mass of a liquid rubber and 95 to 30 parts by mass of a solid rubber component. Further, the solid rubber component used in the present invention contains 30 to 100% by mass of a natural rubber component containing at least one of a natural rubber (NR) and a modified natural rubber (in the following, also referred to as simply "natural rubber component").

### <Solid Rubber Component>

In the rubber composition for a carcass ply or a band of the present invention, the solid rubber component contains a natural rubber component containing at least one of a natural rubber and a modified natural rubber. That is, the natural rubber component of the present invention may consist of only a natural rubber, may consist of only a modified natural rubber, or may contain both. In the present invention, "solid rubber" is defined as a rubber that is capable of maintaining a sheet or a veil shape.

The natural rubber used in the present invention includes any rubber as long as it is known as a natural rubber, and the place of origin and the like are not limited. Such a natural rubber contains cis-1,4-polyisoprene as a main component. However, trans-1,4-polyisoprene can be contained depending on required characteristics. Therefore, the natural rubber also includes a natural rubber containing trans-1,4-isoprene as a main component such as balata that is one kind of a Sapotaceae rubber originated in South America, for example, other than the natural rubber containing cis-1,4-polyisoprene as a main component. The natural rubber component in the present invention can contain one or more kinds (that is, one or more components) of such natural rubbers. Preferred examples of such natural rubbers that can be used include a natural rubber of a grade such as RSS#3 or TSR.

The modified natural rubber used in the present invention indicates a rubber obtained by modifying or refining the above-described natural rubber, and examples thereof include an epoxidized natural rubber (ENR), a deproteinized natural rubber (DPNR), and a hydrogenated natural rubber. The natural rubber component in the present invention can contain one or more kinds of such modified natural rubbers. The natural rubber component in the present invention preferably contains an epoxidized natural rubber among the rubbers described above as the modified natural rubber because the rubber hardness and strength can be obtained.

The epoxidized natural rubber is a kind of a modified natural rubber in which an unsaturated double bond of a natural rubber is epoxidized, and the molecular cohesion is increased by an epoxy group that is a polar group. Because of that, the glass transition temperature (Tg) is higher than that of the natural rubber, and the epoxidized natural rubber is superior in mechanical strength, wear resistance, and air permeability resistance. For example, commercially available products such as ENR25 (manufactured by Kumpulan Guthrie Berhad, epoxidation ratio: 25%) and ENR50 (manufactured by Kumpulan Guthrie Berhad, epoxidation ratio: 50%) may be used as such an epoxidized natural rubber, or a rubber in which a natural rubber is epoxidized may be used. The method of epoxidizing a natural rubber is not especially limited, and examples thereof include a chlorohydrin method, a direct oxidation method, a hydrogen peroxide method, an alkylhydroperoxide method, and a peroxide method. An example of the peroxide method is a method of reacting an emulsion of a natural rubber with an organic peroxide such as peracetic acid or performic acid as an epoxidation agent.

The epoxidation ratio of the epoxidized natural rubber (ENR) is preferably 5% by mol or more, and more preferably 10% by mol or more. Here, the epoxidation ratio means the ratio of the number of the epoxidized double bonds to the total number of double bonds in the natural rubber before the epoxidation ((the number of epoxidized double bonds)/(the number of double bonds before epoxidation)), and can be obtained by a titrimetric analysis, a nuclear magnetic resonance (NMR) analysis, or the like. In the case that the epoxidation ratio of the epoxidized natural rubber (ENR) is less than 5% by mol, it tends to be difficult to obtain desired characteristics such as the rubber hardness and adhesiveness in a pneumatic tire equipped with a carcass ply or a band using the rubber composition for a carcass ply or a band because the glass transition temperature of the epoxidized natural rubber (ENR) is low. Further, the epoxidation ratio of the epoxidized natural rubber (ENR) is preferably 60% by mol or less, and more preferably 55% by mol or less. In the case that the epoxidation ratio of the epoxidized natural rubber (ENR) exceeds 60% by mol, the hardness increases excessively, and it tends to be difficult to obtain the targeted vulcanization property due to reversion in the rubber composition for a carcass ply or a band.

More typical examples of the epoxidized natural rubber (ENR) include an epoxidized natural rubber with an epoxidation ratio of 25% by mol and an epoxidized natural rubber with an epoxidation ratio of 50% by mol.

In the present invention, the content of the natural rubber component in the solid rubber component is preferably 30% by mass or more. This is because a reducing effect of the used amount of raw materials derived from petroleum resources cannot be obtained sufficiently when the content of the natural rubber component in the solid rubber component is less than 30% by mass. The content of the natural rubber component in the solid rubber component is preferably 50% by mass or more. The content of the natural rubber component in the solid rubber component is preferably 100% by mass (that is, the solid rubber component consists of the natural rubber component) from the viewpoint that the reducing effect of the used amount of raw materials derived from petroleum resources is good. However, rubbers other than the natural rubber component may be compounded as a remaining part of the solid rubber component by making the content of the natural rubber component in the solid rubber component 50% by mass or less, or further 30% by mass or less.

Further, the solid rubber component may contain a rubber derived from petroleum resources within the range that the effect of the present invention is not spoiled. Examples of the rubber derived from petroleum resources include a styrene-butadiene rubber (SBR), a butadiene rubber (BR), a styrene-isoprene copolymer rubber, an isoprene rubber (IR), a butyl rubber (IIR), a chloroprene rubber (CR), an acrylonitrile-butadiene rubber (NBR), a halogenated butyl rubber (X-IIR), and a copolymer halide of isobutylene with p-methylstyrene. Among these, SBR, BR, and IR are preferable because desired characteristics such as adhesiveness and heat build-up can be obtained.

In the case that the solid rubber component contains a natural rubber, the content rate of the natural rubber in the solid rubber component is preferably 30% by mass or more, and more preferably 50% by mass or more. In the case that the content rate of the natural rubber in the solid rubber component is less than 30% by mass, the mechanical strength of the rubber composition for a carcass ply or a band tends to be low. Further, the content rate of the natural rubber in the solid rubber component is preferably 90% by mass or less, and more preferably 80% by mass or less.

In the case that the solid rubber component contains an epoxidized natural rubber as the modified natural rubber, the content rate of the epoxidized natural rubber in the solid rubber component is preferably 10% by mass or more, and more preferably 20% by mass or more. In the case that the content rate of the epoxidized natural rubber in the solid rubber component is less than 10% by mass, the improvement effect of the rubber strength tends to be low. Further, the content rate of the epoxidized natural rubber in the solid rubber component is preferably 90% by mass or less, and more preferably 80% by mass or less. In the case that the content rate of the epoxidized natural rubber in the solid rubber component exceeds 90% by mass, the adhesiveness with a cord for a tire tends to be low because the rubber hardness becomes too large.

### <Silica>

The rubber composition for a carcass ply or a band of the present invention contains silica in addition to the solid rubber component. Silica functions as a filler for reinforcing, and the tensile strength of the rubber composition in the obtained carcass ply or band can be improved by compounding silica. Further, because silica is not derived from petroleum resources, the used amount of raw materials derived from petroleum resources in the rubber composition can be reduced compared with the case of compounding a reinforcing agent derived from petroleum resources such as carbon black as a main reinforcing agent.

The rubber composition for a carcass ply or a band of the present invention contains 20 to 80 parts by mass of silica to 100 parts by mass of the rubber component consisting of the solid rubber component as described above and the liquid rubber to be described later. In the case that the content of silica is less than 20 parts by mass to 100 parts by mass of the rubber component, there is a problem that the rubber strength is not enough, and in the case that the content of silica exceeds 80 parts by mass to 100 parts by mass of the rubber component, there is a problem that the adhesiveness with a cord for a tire deteriorates. From the viewpoint of the rubber strength and the adhesiveness with a cord for a tire, the content of silica is preferably in the range of 30 to 70 parts by mass to 100 parts by mass of the rubber component, and more preferably in the range of 40 to 60 parts by mass.

In the rubber composition for a carcass ply or a band of the present invention, silica having a BET specific surface area of 50m²/g or more is preferably used, and silica having a BET specific surface area of 100m²/g or more is more preferably used. In the case of using silica having a BET specific surface area of less than 50m²/g, there is a tendency that sufficient hardness is not obtained. Further, the BET specific surface area of silica is preferably 300m²/g or less, and more preferably 250m²/g or less. In the case of using silica of which the BET specific surface area exceeds 300m²/g, the processability of the rubber tends to decrease. The BET specific surface area of silica can be measured by a method in accordance with ASTM-D-4820-93, for example.

Silica may be prepared by a wet method or may be prepared by a dry method. Examples of a preferred product on the market include ULTRASIL VN2 (manufactured by Evonik Degussa, BET specific surface area: 125m²/g) and ULTRASIL VN3 (manufactured by Evonik Degussa, BET specific surface area: 175m²/g).

### <Liquid Rubber>

The rubber composition for a carcass ply or a band of the present invention further contains a liquid rubber. A "liquid rubber" in the present invention is defined as a rubber that does not have a fixed shape and that is difficult to handle without putting in a bag or the like. Examples of such a liquid rubber include a liquid natural rubber, a liquid polyisoprene rubber, a liquid polybutadiene rubber, a liquid styrene-butadiene rubber, a liquid nitrile rubber, and a liquid chloroprene rubber. One or more kinds of a liquid rubber selected from above can be used in the rubber composition for a carcass ply or a band of the present invention. Among these, a liquid natural rubber is preferable because it is not derived from petroleum resources and adhesiveness with a cord for a tire can be improved.

Further, a liquid rubber in which hydrogen is added to a double bond can be preferably used in the rubber composition for a carcass ply or a band of the present invention. Further, a liquid rubber having a functional group in a side chain of a molecular chain and/or in the end may be used. Examples of such a functional group include a hydroxyl group, an amino group, a carboxyl group, a halogen atom, an epoxy group, and an isocyanate group. Further, a liquid rubber having a form of a maleic acid modified product may be used.

The number average molecular weight of the liquid rubber used in the present invention is preferably in the range of 2000 to 5000, and more preferably in the range of 3000 to 30000. In the case that the number average molecular weight of the liquid rubber is less than 2000, the rubber strength tends to decrease, and in the case that the number average molecular weight of the liquid rubber exceeds 50000, the adhesiveness with a cord for a tire tends to decrease. The number average molecular weight of the liquid rubber means a value measured using a gas chromatography apparatus.

Specific examples of the preferred liquid rubber in the rubber composition for a carcass ply or a band of the present invention include a product on the market such as L-NR (manufactured by RIMCORP in Malaysia).

The rubber composition for a carcass ply or a band of the present invention contains 5 to 70 parts by mass of the above-described liquid rubber and 95 to 30 parts by mass of the above-described solid rubber component in 100 parts by mass of the rubber component. In the case of using two or more kinds of the liquid rubbers, the content indicates the total amount of the liquid rubbers. In the case that the content of the liquid rubber is less than 5 parts by mass in 100 parts by mass of the rubber component, the adhesiveness with a cord for a tire becomes insufficient, and in the case that the content of the liquid rubber exceeds 70 parts by mass in 100 parts by mass of the rubber component, the rubber strength decreases. From the viewpoint of the adhesiveness with a cord for a tire and the rubber strength, the content of the liquid rubber is preferably in the range of 10 to 60 parts by mass in 100 parts by mass of the rubber component, and more preferably in the range of 15 to 40 parts by mass.

### <Silane Coupling Agent>

The rubber composition for a carcass ply or a band of the present invention contains silica as described above, and a silane coupling agent is preferably compounded with the silica. A conventionally known silane coupling agent can be used, and examples thereof include sulfide-based agents such as
bis(3-triethoxysilylpropyl)tetrasulfide, bis(2-triethoxysilylethyl)tetrasulfide,
bis(4-triethoxysilylbutyl)tetrasulfide, bis(3-trimethoxysilylpropyl)tetrasulfide,
bis(2-trimethoxysilylethyl)tetrasulfide, bis(4-trimethoxysilylbutyl)tetrasulfide,
bis(3-triethoxysilylpropyl)trisulfide, bis(2-triethoxysilylethyl)trisulfide,
bis(4-triethoxysilylbutyl)trisulfide, bis(3-trimethoxysilylpropyl)trisulfide,
bis(2-trimethoxysilylethyl)trisulfide, bis(4-trimethoxysilylbutyl)trisulfide,
bis(3-triethoxysilylpropyl)disulfide, bis(2-triethoxysilylethyl)disulfide,
bis(4-triethoxysilylbutyl)disulfide, bis(3-trimethoxysilylpropyl)disulfide,
bis(2-trimethoxysilylethyl)disulfide, bis(4-trimethoxysilylbutyl)disulfide,
3-trimethoxysilylpropyl-N,N-dimethylthiocarbamoyltetrasulfide,
3-triethoxysilylpropyl-N,N-dimethylthiocarbamoyltetrasulfide,
2-triethoxysilylethyl-N,N-dimethylthiocarbamoyltetrasulfide,
2-trimethoxysilylethyl-N,N-dimethylthiocarbamoyltetrasulfide,
3-trimethoxysilylpropylbenzothiazolyltetrasulfide,
3-triethoxysilylpropylbenzothiazoletetrasulfide,
3-trimethoxysilylpropylmethacrylatemonosulfide, and
3-trimethoxysilylpropylmethacrylatemonosulfide; mercapto-based agents such as 3-mercaptopropyltrimethoxysilane, 3-mercaptopropyltriethoxysilane,
2-mercaptoethyltrimethoxysilane, and 2-mercaptoethyltriethoxysilane; vinyl-based agents such as vinyltriethoxysilane and vinyltrimethoxysilane; amino-based agents such as 3-aminopropyltriethoxysilane, 3-aminopropyltrimethoxysilane,
3-(2-aminoethyl)aminopropyltriethoxysilane, and
3-(2-aminoethyl)aminopropyltrimethoxysiane; glycidoxy-based agents such as
γ -glycidoxypropyltriethoxysilane, γ-glycidoxypropyltrimethoxysilane,
γ -glycidoxypropylmethyldiethoxysilane, and γ-glycidoxypropylmethyldimethoxysilane;
nitro-based agents such as 3-nitropropyltrimethoxysilane and
3-nitropropyltriethoxysilane; and chloro-based agents such as 3-chloropropylmethoxysilane, 3-chloropropyltriethoxysilane,
2-chloroethyltrimethoxysilane, and 2-chloroethyltriethoxysilane. The above-described silane coupling agents may be used alone, and two or more kinds may be combined and used.

Among the above, Si69 (manufactured by Evonik Degussa, bis(3-triethoxysilylpropyl)tetrasulfide), Si266 (manufactured by Evonik Degussa, bis(3-triethoxysilylpropyl)disulfide), and the like can be preferably used because the processability is good.

In the case of further including a silane coupling agent, the content is not especially limited. However, 4 parts by mass or more is preferable to 100 parts by mass of silica, and 6 parts by mass or more is more preferable. In the case that the content of the silane coupling agent is less than 4 parts by mass to 100 parts by mass of silica, kneading and extrusion processability of the rubber tends to decrease and the rubber strength tends to decrease. Further, the content of the silane coupling agent is preferably 15 parts by mass or less to 100 parts by mass of silica, and more preferably 12 parts by mass or less. In the case that the content of the silane coupling agent exceeds 15 parts by mass to 100 parts by mass of silica, the improving effect of kneading and extrusion processability of the rubber is small, and on the other hand, it is not economical because the cost increases, and the rubber strength tends to decrease.

### <Other Compounding Agents>

Other compounding agents used in the conventional rubber industry such as a vulcanization agent, stearic acid, a vulcanization accelerator, a vulcanization accelerator aid, an oil, a cured resin, a wax, and an antioxidant may be compounded in the rubber composition for a carcass ply or a band of the present invention other than the above-described components.

An organic peroxide or a sulfur vulcanization agent can be used as the vulcanization agent, and examples of the organic peroxide that can be used include benzoylperoxide, dicumylperoxide, di-t-butylperoxide, t-butylcumylperoxide, methylethylketoneperoxide, cumenehydroperoxide,
2,5-dimethyl-2,5-di(t-butylperoxy)hexane, 2,5-dimethyl-2,5-di(benzoylperoxy)hexane, 2,5-dimethyl-2,5-di(t-butylperoxy)hexine-3 or 1,3-bis(t-butylperoxypropyl)benzene, di-t-butylperoxy-diisopropylbenzene, t-butylperoxybenzene,
2,4-dichlorobenzoylperoxide, 1,1-di-t-butylperoxy-3,3,5-trimethylcycloxane, and n-butyl-4,4-di-t-butylperoxyvalerate. Among these, dicumylperoxide,
t-butylperoxybenzene, and di-t-butylperoxy-diisopropylbenzene are preferable. Further, examples of the sulfur vulcanization agent that can be used include sulfur and morpholinedisulfide. Among these, sulfur is preferable. These vulcanization agents may be used alone, or two or more kinds may be combined and used.

It is possible to use a vulcanization accelerator containing at least one of a sulfeneamide based, thiazole based, thiuram based, thiourea based, guanidine based, dithiocarbamate based, aldehyde-amine based or aldehyde-ammonia based, imidazoline based, and xanthate based vulcanization accelerators. Examples of the sulfeneamide based accelerator that can be used include sulfeneamide compounds such as CBS
(N-cyclohexyl-2-benzothiasilsulfeneamide), TBBS
(N-tert-butyl-2-benzothiasilsulfeneamide), N,N-dicyclohexyl-2-benzothiasilsulfeneamide, N-oxydiethylene-2-benzothiasilsulfeneamide, and N, N-diisopropyl-2-benzothiazolesulfeneamide. Examples of the thiazole based accelerator that can be used include thiazole compounds such as MBT
(2-mercaptobenzothiazole), MBTS (dibenzothiasildisulfide), a sodium salt, a zinc salt, a copper salt, and a cyclohexylamine salt of 2-mercaptobenzothiazole,
2-(2,4-dinitrophenyl)mercaptobenzothiazole, and
2-(2,6-diethyl-4-morpholinothio)benzothiazole). Examples of the thiuram based accelerator that can be used include thiuram compounds such as TMTD (tetramethylthiuramdisulfide), tetraethylthiuramdisulfide, tetramethylthiurammonosulfide, dipentamethylenethiuramdisulfide, dipentamethylenethiurammonosulfide, dipentamethylenethiuramtetrasulfide, dipentamethylenethiuramhexasulfide, tetrabutylthiuramdisulfide, and pentamethylenethiuramtetrasulfide. Examples of the thiourea based accelerator that can be used include thiourea compounds such as thiacarbamide, diethythiourea, dibutylthiourea, trimethlthiourea, and diorthotolylthiourea. Examples of the guanidine based accelerator that can be used include guanidine compounds such as diphenylguanidine, diorthotolylguanidine, triphenylguanidine, orthotolylbiguanide, and diphenylguanidinephthalate. Examples of the dithiocarbamate based accelerator that can be used include dithiocarbamate compounds such as zinc ethylphenyldithiocarbamate, zinc butylphenyldithiocarbamate, sodium dimethyldithiocarbamate, zinc dimethyldithiocarbamate, zinc diethyldithiocarbamate, zinc dibutydithiocarbamate, zinc diamyldithiocarbamate, zinc dipropyldithiocarbamate, a complex salt of zinc pentamethylenedithiocarbamate and piperidine, zinc hexadecyl(or octadecyl)isopropyldithiocarbamate, zinc dibenzyldithiocarbamate, sodium diethyldithiocarbamate, piperidine pentamethylenedithiocarbamate, selenium dimethyldithiocarbamate, tellurium diethyldithiocarbamate, and cadmium diamyldithiocarbamate. Examples of the aldehyde-amine based accelerator or the aldehyde-ammonia based accelerator that can be used include aldehyde-amine compounds or aldehyde-ammonia compounds such as an acetoaldehyde-aniline reaction product, a butylaldehyde-aniline condensate, hexamethylenetetramine, and an acetoaldehyde-ammonia reaction product. Examples of the imidazoline based accelerator that can be used include imidazoline based compounds such as 2-mercaptoimidazoline. Examples of the xanthate based accelerator that can be used include xanthate based compounds such as zinc dibutylxanthogenate. These vulcanization accelerators may be used alone or two or more kinds may be combined and used.

Examples of the vulcanization accelerator aid that can be used include zinc oxide and zinc stearate.

An amine based antioxidant, a phenol based antioxidant, an imidazole based antioxidant, and a metal carbamate can be appropriately selected and used as the antioxidant.

Examples of the oil include process oil, vegetable oil, and mixtures of these. Examples of the process oil include paraffin process oil, naphthene process oil, and aromatic process oil. Examples of the vegetable oil include castor oil, cottonseed oil, flaxseed oil, canola oil, soybean oil, palm oil, coconut oil, peanut oil, pine oil, pine tar, tall oil, corn oil, rice oil, safflower oil, sesame seed oil, olive oil, sunflower oil, palm seed oil, camellia oil, jojoba oil, macadamia nut oil, safflower oil, and tung oil.

The rubber composition for a carcass ply or a band of the present invention maintains characteristics desired for a rubber composition for a carcass ply or a band such as adhesiveness with a cord for a tire, durability such as rubber strength, and the process-passing property while decreasing the used amount of raw materials derived from petroleum resources. Specifically, the rubber composition for a carcass ply or a band of the present invention has an adhesive force measured using an Instron type tensile test machine as an index of the durability of 250 N/25 mm or more, and an evaluation rating with rubber to be described below of 3 or more as will be clarified in Examples to be described later.

Evaluation Rating with Rubber

| | |
|---|---|
| 5 | 100% with rubber |
| 4 | 80 to 99% with rubber |
| 3 | 50 to 79% with rubber |
| 2 | 30 to 49% with rubber |
| 1 | 0 to 29% with rubber |

The present invention also provides a pneumatic tire equipped with a carcass ply or a band constituted from the rubber composition for a carcass ply or a band of the present invention as described above and a cord for a tire buried in the rubber composition. Here, Fig. 1 is a brief cross-sectional drawing showing one example of the pneumatic tire of the present invention. A pneumatic tire 1 is equipped with a tread part 2, a pair of side wall parts 3 extending inward to the tire radius direction from both ends of tread 2, and bead parts 4 located at the inner end of each side wall 3. Further, a carcass 6 is bridged over between bead parts 4, and a belt layer 7 having a hoop effect and reinforcing tread part 2 is provided outside ply 6 and inside of tread part 2.

The above-described carcass 6 is formed from one or more carcass ply 6a in which a carcass cord is arranged at an angle of 70° to 90°, for example, to the tire midline CO, and carcass ply 6a is secured in by being folded back and surrounding bead cores 5 of bead parts 4 from tread part 2 through side wall 3 from the inside to the outside of the tire axial direction.

Belt layer 7 consists of two or more belt plies 7a in which a belt cord is arranged at an angle of 40° or less, for example, to the tire midline CO, and each belt cord is layered in a different direction so that it intersects between plies. Moreover, a band layer (not shown in the drawing) to prevent the lifting of both end parts of belt layer 7 may be provided at least outside of belt layer 7, and at this time, the band layer forms an organic fiber cord of low modulus with a continuous ply spirally wound almost parallel to the tire midline CO.

Further, a bead apex rubber 8 extending outward to the tire radius direction from bead core 5 is provided in bead part 4, an inner liner rubber 9 that constitutes an inner cavity face of a tire is adjacently provided inside carcass 6, and the outside of carcass 6 is protected with a clinch rubber 4G and a side wall rubber 3G. An example of which the rubber composition of the present invention is used in carcass ply 6a is shown in Fig. 1.

An example of a pneumatic tire for an automobile is shown in Fig. 1. However, the present invention is not limited to this, and provides a pneumatic tire used in various vehicles such as an automobile, a truck, a bus, and a heavy load vehicle.

The pneumatic tire of the present invention can be manufactured by a conventionally known method using the rubber composition for a carcass or a band of the present invention. That is, the tire of the present invention can be obtained by kneading the rubber composition containing the above-described necessary components and other compounding agents compounded depending on necessity, extruding and molding the rubber composition to match a shape of a carcass ply of a tire, for example, at a non-vulcanized stage, producing a carcass ply by pasting it on the top and bottom of a cord for a tire and burying, forming a non-vulcanized tire by molding it with other members of the tire on a tire molding machine by a normal method, and heating and pressurizing this non-vulcanized tire in a vulcanization machine.

The carcass ply or the band in the tire of the present invention is not especially limited as long as the above-described rubber composition of the present invention is used, and a conventionally known appropriate material (such as a rayon fiber and a refined cellulose fiber) can be used also as a cord for a tire.

The pneumatic tire of the present invention is an "eco-tire" that is friendly to the earth environment and in which the content ratio of components derived from petroleum resources in the rubber composition used in a carcass ply or a band is further reduced, consideration for resource saving and environmental protection is made sufficiently, and good physical characteristics are maintained.

The present invention is described in further detail by referring to the examples and comparative examples below. However, the present invention is not limited to these examples.

### <Examples 1 to 5 and Comparative Examples 1 to 4>

According to the compounding prescription shown in Table 1, compounding components excluding sulfur and a vulcanization accelerator were filled so that the filling ratio became 58% using a 1.7 L Banbury mixer manufactured by Kobe Steel, Ltd., and the components were kneaded at a rotation speed of 80 rpm for 3 minutes until the temperature reached 140°C. Then, sulfur and the vulcanization accelerator were added into the resulting kneaded product according to the compounding amounts shown in Table 1, the product was kneaded at 80°C for 5 minutes using an open roll, molded into a sheet of 2mm thickness in conformity with a shape of a carcass ply of a tire using a 6 inch roll, the rubber composition was pasted onto the top and bottom of a union tire cord (material: rayon fiber, diameter: two plies of 1840 dtex, ends: 51 pieces/5cm), and was vulcanized at 170°C for 20 minutes, and a vulcanized rubber sample was obtained.

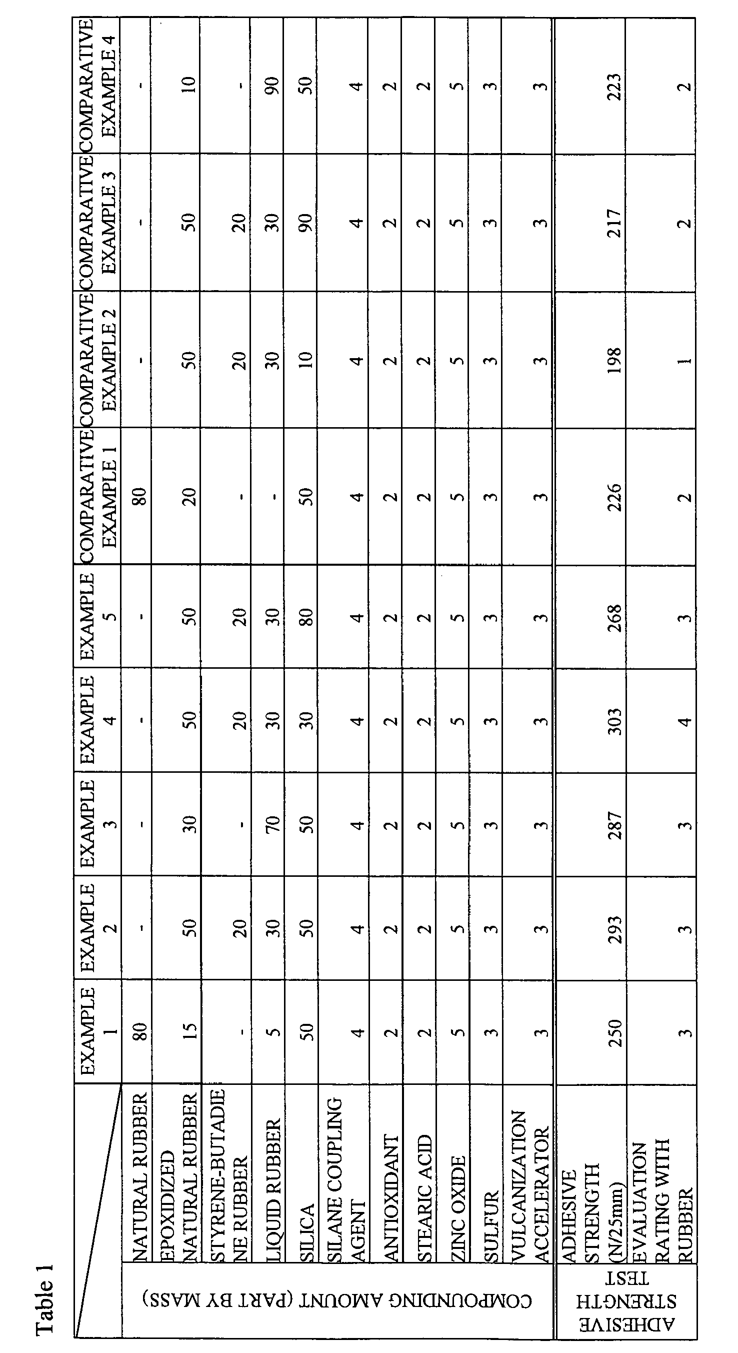

The details of various compounding components used in Examples and Comparative Examples are as follows.
(1) Natural rubber (NR): SIR20
(2) Epoxidized natural rubber (ENR): ENR 25 (manufactured by Kumpulan Guthrie Berhad) (epoxidation ratio: 25%)
(3) Styrene-butadiene rubber (SBR): SBR1502 (manufactured by Sumitomo Chemical Co., Ltd.)
(4) Silica: ULTRASIL VN3 (manufactured by Evonik Degussa) (BET specific surface area: 175m²/g)
(5) Silane coupling agent: Si266 (manufactured by Evonik Degussa)
(6) Liquid rubber: L-NR (manufactured by RIMCORP in Malaysia)
(7) Antioxidant: Antigen FR (manufactured by Sumitomo Chemical Co., Ltd.)
(8) Stearic acid: Stearic acid Tsubaki (manufactured by NOF Corporation)
(9) Zinc oxide: Zinc white (manufactured Mitsui Mining & Smelting Co., Ltd.)
(10) Sulfur: 5% oil processed powder sulfur (manufactured by Tsurumi Chemical)
(11) Vulcanization accelerator: TBBS (manufactured by Ouchi Shinko Chemical Industrial Co., Ltd.)

The following tests were performed on the vulcanized rubber samples obtained in Examples and Comparative Examples. The test results are also shown in Table 1.

### (Adhesive Strength Test)

An adhesive strength (N/25mm) was measured using an Instron type tensile test machine as an index of the durability, and the evaluation rating with rubber was evaluated as follows.

Evaluation Rating with Rubber

| | |
|---|---|
| 5 | 100% with rubber |
| 4 | 80 to 99% with rubber |
| 3 | 50 to 79% with rubber |
| 2 | 30 to 49% with rubber |
| 1 | 0 to 29% with rubber |

Although the present invention has been described and illustrated in detail, it is clearly understood that the same is by way of illustration and example only and is not to be taken by way of limitation, the scope of the present invention being interpreted by the terms of the appended claims.

## Claims

1. A rubber composition for a carcass ply or a band comprising 20 to 80 parts by mass of silica to 100 parts by mass of a rubber component consisting of 5 to 70 parts by mass of a liquid rubber and 95 to 30 parts by mass of a solid rubber component, wherein said solid rubber component contains 30 to 100% by mass of a natural rubber component containing at least one of a natural rubber and a modified natural rubber.

2. The rubber composition for a carcass ply or a band according to claim 1, wherein the modified natural rubber is an epoxidized natural rubber.

3. The rubber composition for a carcass ply or a band according to claim 1, wherein the liquid rubber is a liquid natural rubber.

4. The rubber composition for a carcass ply or a band according to claim 1, wherein said solid rubber component consists of said natural rubber component.

5. A pneumatic tire equipped with a carcass ply or a band constituted from the rubber composition according to claim 1 and a cord for a tire buried in the rubber composition.
